# EUROPEAN PATENT APPLICATION

(11) **EP 3 181 893 A1**
(43) Date of publication of application: **21.06.2017**
(21) Application number: 15832194.3
(22) Date of filing: 06.08.2015
(51) Int. Cl.: F03B 13/18, F03D 9/00

(54) **POWER GENERATION SYSTEM AND RECIPROCATING MOTION MECHANISM FOR POWER GENERATION SYSTEM**

(30) Priority: 12.08.2014 JP 2014164159; 30.10.2014 JP 2014221736; 04.08.2015 JP 2015154005
(71) Applicant: Nishikaze Giken Kabushiki Kaisha, Fussa-shi, Tokyo 197-0011 (JP)
(72) Inventor: NISHIURA, Shinichi, Fussa-shi Tokyo 197-0011 (JP)
(74) Representative: Kolster Oy Ab
(86) International application number: PCT/JP2015/072361
(87) International publication number: WO 2016/024520

(57) **Abstract**

Provided is an electric power generation system with which, when converting energy of a flowing fluid, such as wind power or wave power, into electric power, an electric power generation mechanism is located at a site different from a site that receives the energy of the flowing fluid, and the electric power generation mechanism does not receive abnormal winds or an abnormal waves of a typhoon or the like. In the electric power generation system, a reciprocating mechanism (20) is connected to a fluid receiving mechanism (10) that receives a flowing fluid, motion of the fluid receiving mechanism is converted into reciprocating motion, the reciprocating motion is transmitted to an electric power generation mechanism (30) that is disposed in a region different from a region in which the fluid receiving mechanism is disposed, and the reciprocating motion is converted into electric power. The reciprocating mechanism includes a tubular outer cable (22) that is disposed between the fluid receiving mechanism and the electric power generation mechanism, and an inner cable (21) that is inserted through the outer cable (22), that is connected to the fluid receiving mechanism and to the electric power generation mechanism, that performs reciprocating motion in the outer cable in accordance with the motion of the fluid receiving mechanism, and that transmits the reciprocating motion to the electric power generation mechanism.

## Description

### Technical Field

The present invention relates to an electric power generation system that generates electric power by using the flow of a fluid that occurs in the natural world, such as winds, tides, waves, river flow, and the like. In particular, the present invention relates to a wind electric power generation system, a wave electric power generation system, and a reciprocating mechanism that is used for the electric power generation systems.

### Background Art

In existing wind power, in order to achieve high power generation efficiency, the entirety of an electric power generation system is disposed in an upper part of a tower that receives winds. That is, all of a blade, a rotor, and an electric power generation mechanism are disposed in the upper part of the tower, and electric power is generated in the upper part of the tower (see, for example, PTLs 1 and 2).

However, since the weight of the electric power generation mechanism accounts for about 70% of the weight of the entire system, when the electric power generation mechanism is disposed in the upper part of the tower, not only the total weight of the system becomes heavy but also the system becomes unstable because the center of gravity of the system is at an excessively high position. Moreover, because the wind electric power generation system is located in a harsh natural environment, the system needs to have a strong structure that can withstand strong winds of a typhoon or the like. Therefore, the existing wind electric power generation system has problems in that the facility cost is considerably high and it is not possible to use a simple design. Moreover, if the system is damaged, the repair cost is considerably high. For these reasons, wind electric power generation has not become as widespread as expected.

There are several electric power generation methods for wave electric power generation systems (see, for example, PTLs 3 to 5 and NPLs 1 and 2). However, all of these methods have a common problem, because the systems are located in a harsh natural environment. For example, an oscillating-water-column wave electric power generation system described in NPL 1 uses a method in which an air chamber is formed in an apparatus and an air turbine is rotated by using oscillatory flow of air that is caused by up-and-down motion of the sea surface. Accordingly, with this method, a heavy electric power generation mechanism is disposed in the apparatus, and therefore the entirety of the apparatus needs to be sufficiently strong so that the apparatus can withstand abnormal waves of a typhoon or the like. As a result, this method has a problem in that the facility cost increases considerably. Likewise, with other methods, it is necessary to install a heavy electric power generation mechanism in the apparatus, and, as a result, the entirety of the apparatus needs to be sufficiently strong so that the apparatus can withstand abnormal waves of a typhoon or the like. Thus, all of the existing methods have problems in that the facility cost is excessively high and it is not possible to use a simple design. For these reasons, wave electric power generation also has not become as widespread as expected.

### Citation List

### Patent Literature

PTL 1: Japanese Unexamined Patent Application Publication No. 10-37844
PTL 2: Japanese Unexamined Patent Application Publication No. 2004-274973
PTL 3: Japanese Unexamined Patent Application Publication No. 5-164036
PTL 4: Japanese Unexamined Patent Application Publication No. 2005-207332
PTL 5: Japanese Unexamined Patent Application Publication No. 2008-180086

### Non Patent Literature

NPL 1: Study Committee on Wave Electric Power Generation "Report of Study Committee on Wave Electric Power Generation", disclosed on the WEB in March 2010
NPL 2: NEDO Renewable Energy Technology White Paper, 6 Current State and Roadmap of Wave Electric Power Generation Technology 311-369, disclosed on the WEB

### Summary of Invention

### Technical Problem

The present inventor focused on the fact that, in existing electric power generation systems of this type, the electric power generation mechanism has been located in a harsh environment and found that, by locating the electric power generation mechanism at a site remote from the harsh environment, it is possible to considerably reduce the facility cost and to increase the power generation efficiency (benefit-cost ratio) of an electric power generation system in its entirety without excessively sacrificing the design of the power generation system.

That is, an object of the present invention is to provide an electric power generation system that is prevented from being subjected to abnormal winds or abnormal waves of a typhoon or the like by locating an electric power generation mechanism, which converts the energy of a flowing fluid, such as wind power or wave power into electric power, at a site different from a site that receives the energy of a flowing fluid, such as wind power or wave power.

Another object of the present invention is to reduce the total weight of devices that are located at a site that receives wind power, wave power, or the like by locating an electric power generation mechanism at a different site that does not receive abnormal winds and abnormal waves of a typhoon or the like, and, as a result, to provide an electric power generation system with which the facility cost needed to take safety measures against abnormal winds and abnormal waves of a typhoon or the like (such as prevention of breakage of the wind electric power generation device or drifting of the wave electric power generation device) can be reduced and for which a simple design can be used.

### Solution to Problem

The present invention is primarily characterized in that the electric power generation mechanism is not directly located at a site that receives the energy of a flowing fluid, such as wind power or wave power, but is located at a different site that is remote from the site that receives the energy of the fluid. In order to realize this, it is necessary to use a mechanism that transmits the energy of a flowing fluid, such as wind power or wave power, to an electric power generation mechanism located at a different site. The present inventor focused on a wire cable, which has both toughness and flexibility, as a mechanism for transmitting the energy of a flowing fluid, such as wind power or wave power, to the electric power generation mechanism. That is, the energy of a flowing fluid, such as wind power or wave power, is converted into reciprocating motion of the wire cable; and the electric power generation mechanism, which is located at a different site, converts the reciprocating motion of the wire cable into rotational motion and generates electric power. Thus, by using the wire cable, it is possible to transmit the energy of a flowing fluid, such as wind power or wave power, to the electric power generation mechanism located at a different site. To be specific, a tubular outer cable is disposed between the fluid receiving mechanism and the electric power generation mechanism; an inner cable, which has both toughness and flexibility, is inserted through the outer cable; the inner cable is connected to the fluid receiving mechanism and to the electric power generation mechanism; the inner cable is made to perform reciprocating motion in the outer cable in accordance with motion of the fluid receiving mechanism; and the reciprocating motion is transmitted to the electric power generation mechanism. Thus, the energy of a flowing fluid, such as wind power or wave power, is transmitted from the fluid receiving mechanism to the electric power generation mechanism, which is located at a site remote from the fluid receiving mechanism, via the reciprocating motion of the inner cable, and thereby the aforementioned objects of the present invention have been achieved.

Next, in order that the inner cable can reliably receive the energy of a flowing fluid, such as wind power or wave power, and appropriately transmit the energy to the electric power generation mechanism, both end portions of the inner cable, which are connected to the receiving mechanism and the electric power generation mechanism, need to have structures that can efficiently receive the energy.

Therefore, the present inventor exposed both end portions of the inner cable from the outer cable; attached mechanical power transmission elements, having rigidity, to the exposed portions; connected the mechanical power transmission elements respectively to the receiving mechanism and to the electric power generation mechanism; and attached tubular guide members, which guide the mechanical power transmission elements so as to be reciprocatingly movable, respectively to the receiving mechanism side and to the electric power generation mechanism side. Thus, the inner cable can efficiently receive the energy of a fluid from the receiving mechanism and transmit energy to the electric power generation mechanism, and, as a result, the present inventor achieved the aforementioned object of reliably transmitting the energy of a fluid.

Wind electric power generation systems have a specific problem in that the orientation of the receiving mechanism (to be specific, the blade or the rotor shaft) changes in accordance with the wind direction. In order to solve the problem, the present inventor enabled wind energy to be reliably transmitted to the inner cable even if the orientation of the receiving mechanism changes in accordance with the wind direction, and thereby solved the problem specific to wind electric power generation.

Wave electric power generation systems have a specific problem in that, when the sea surface rises, a float receives large wave power and the inner cable can move upward in accordance with the rise of the sea surface, but the response of the float is low when the sea surface falls, because the specific gravity of the float is smaller than that of seawater. In order to solve this problem, the present inventor disposed a plate member in the receiving mechanism so that a gap is formed between the plate member and the lower surface of the float on the sea surface, and allowed seawater to enter the gap between the float and the plate member. Thus, owing to the weight of seawater between the float and the plate member, the float can responsively move downward when the sea surface falls, and the problem is solved. Note that the plate member does not have a negative effect on the response when the sea surface rises, because the plate member is normally in seawater when the sea surface rises as the plate member is disposed below the float and seawater is present between the float and the plate member.

Wave electric power generation systems have another specific problem in that the amplitude of up-and-down motion of the sea surface and the reference position of the up-and-down motion vary considerably due to various reasons such as the tide and the height of waves. In order to convert such up-and-down motion into stable rotational motion, the electric power generation mechanism converts the up-and-down motion into unidirectional rotational motion by using gears and the like including a one-way clutch mechanism so that the mechanical power transmission shaft of the electric power generation mechanism can constantly rotate in one direction, and thereby the problem specific to the wave electric power generation system was solved.

Next, the present invention will be described in detail by citing the inventions described in the claims.

According to the present invention, an electric power generation system includes a fluid receiving mechanism that is disposed in a region that receives a flowing fluid and that performs motion selected from a group consisting of rotational motion and reciprocating motion in accordance with a flow of the fluid, a reciprocating mechanism that is connected to the fluid receiving mechanism and that performs reciprocating motion on the basis of the motion of the fluid receiving mechanism, and an electric power generation mechanism that is disposed in a region different from the region in which the fluid receiving mechanism is disposed and that converts the reciprocating motion of the reciprocating mechanism into electric power. The reciprocating mechanism includes a tubular outer cable that is disposed between the fluid receiving mechanism and the electric power generation mechanism; and an inner cable that is inserted through the outer cable, that is connected to the fluid receiving mechanism and to the electric power generation mechanism, that performs reciprocating motion in the outer cable in accordance with the motion of the fluid receiving mechanism, and that transmits the reciprocating motion to the electric power generation mechanism.

In the present invention, the term "flowing fluid" mainly means, for example, a wind, the tide, a sea wave, river flow, or the like, which naturally (not artificially) occurs. However, the meaning of the term does not exclude a fluid that flows artificially, such as seawater that flows in accordance with movement of a ship or a flow of an artificially made fluid (such as a liquid used in a factory or the like).

The phrase "a region that receives a flow" means a region that directly receives a flow of such a fluid, which is, for example, a region where strong winds blow and that is suitable for wind electric power generation or a region where the tide and sea waves occur and that is suitable for wave electric power generation.

The phrase "performs motion selected from a group consisting of rotational motion and reciprocating motion in accordance with a flow of the fluid" means, for example, rotation of a blade that receives wind power or up-and-down bobbing of a float that receives the tide or sea waves:

The phrase "performs reciprocating motion on the basis of the motion of the fluid receiving mechanism" means that, in a case where the fluid receiving mechanism is performing rotational motion, for example, the rotational motion is converted into reciprocating motion via a piston-crank mechanism or the like. In a case where the fluid receiving mechanism is performing reciprocating motion (for example, up-and-down bobbing of a float or the like), the phrase means performing reciprocating motion in accordance with the reciprocating motion.

The phrase "disposed in a region different from the region in which the fluid receiving mechanism is disposed" means, in other words, disposing in a facility or an apparatus that is physically different from and remote from a facility or an apparatus in which the fluid receiving mechanism is disposed. For example, in a case where the fluid receiving mechanism is disposed at a position that is substantially higher than the ground so as to receive wind power, the electric power generation mechanism is not disposed at this position but is disposed on a part of the ground that is remote from the region and that does not substantially receive wind power. In a case where the fluid receiving mechanism is disposed at a site that sufficiently receives wave power, the phrase means disposing not at this position but on a part of land remote from the position.

Note that, in the phrase "disposed in a region different from the region in which the fluid receiving mechanism is disposed", is not necessarily limited to a region on land. For example, in a case where the fluid receiving mechanism is disposed in a ship, a yacht, or the like, even if the electric power generation mechanism is disposed in the ship, the yacht, or the like, the electric power generation mechanism is "disposed in a region different from the region in which the fluid receiving mechanism is disposed" as long as the electric power generation mechanism is disposed at a different place in the ship, the yacht, or the like via the reciprocating mechanism.

Regarding the phrase "converts the reciprocating motion into electric power", the conversion method is not limited. As in wind electric power generation, in a case where the amplitude of reciprocating motion is constant, for example, the reciprocating motion can be converted into rotational motion by using a piston-crank mechanism or the like and can be converted into electric power. As in wave electric power generation, in a case where the amplitude of up-and-down motion varies, the up-and-down motion is converted into unidirectional rotational motion by using gears and the like, which include a one-way clutch mechanism, and this is converted into electric power. The aforementioned method converts reciprocating motion into rotational motion. However, it is also possible to convert reciprocating motion into electric power without converting into rotational motion (note that, because the technology for directly converting reciprocating motion into electric power is a known technology, description of the technology is omitted here).

Next, the reciprocating mechanism transmits the motion of the fluid receiving mechanism to the electric power generation mechanism, which is disposed at a site different from the fluid receiving mechanism. The basic structure of the reciprocating mechanism is constituted by the inner cable and the outer cable.

That is, the "inner cable" is interconnected to a device of the fluid receiving mechanism that performs rotational motion or a device of the fluid receiving mechanism that performs reciprocating motion and a device of the electric power generation mechanism that rotates, performs reciprocating motion in accordance with the rotational motion or the reciprocating motion of the fluid receiving mechanism, and has a function of transmitting the reciprocating motion to the device of a power generation member that rotates. For the inner cable, a material having rigidity (toughness) that can withstand continuous reciprocating motion is required. Moreover, there are cases where the path from the fluid receiving mechanism to the electric power generation mechanism is not necessarily straight but is supposed to be curved and long. Therefore, a material and a structure having flexibility with which the inner cable can adapt to such cases are required. In a case where frictional heat is generated between the inner cable and the outer cable, high heat dissipation characteristic is required. An example of an inner cable having these characteristics is an inner cable that is made of one or more materials selected from a group consisting of a metal such as a stainless steel, a carbon material, a resin, and a synthetic fiber and that has one or more structures made of the one or more materials and selected from a group consisting of a single wire, a stranded wire, and a composite structure of the single wire and the stranded wire. An inner cable can have these characteristics by forming one or more cover layers in an outer part of the inner cable, each of the cover layers being made of one or more materials selected from a group consisting of a metal, a carbon material, a resin, and a synthetic fiber and having one or more structures selected from a single layer, a mesh structure layer, a wound-wire layer, and a composite structure of the layers.

The outer cable is tubular, is disposed between the fluid receiving mechanism and the electric power generation mechanism, and allows the inner cable, which is inserted through the outer cable, to smoothly perform reciprocating motion. For example, the outer cable is made of one or more materials selected from a group consisting of a metal such as a stainless steel, a carbon material, a resin, and a synthetic fiber and includes one or more layers made of the one or more materials and selected from a group consisting of a single layer, a wound-wire layer, a mesh structure layer, and a composite of the layers. To be specific, examples of the outer cable include an outer cable having four layers of interwoven fibers, which are a liner, a steel wire, a fiber mesh braid, and a clear coating.

Preferably, an inner surface of the outer cable is coated with a fluorocarbon resin or the like to reduce the coefficient of friction between the outer cable and the inner cable and to provide the outer cable with a self-lubricating function so that the inner cable can smoothly perform reciprocating motion.

Moreover, preferably, the outer surface of the outer cable is processed with waterproofing and ultraviolet-resistant coating so that the outer cable may not deteriorate or degenerate, because the outer surface of the outer cable is exposed to harsh climate conditions.

Preferably, the inner cable is disposed so as to be slidable relative to the outer cable. In order to make the inner cable slidable, preferably, for example, one or both of the outer surface of the inner cable and the inner surface of the outer cable may be coated with a coating for reducing friction (for example, a fluorocarbon resin coating). A space between the inner surface and the outer cable may be filled with a liquid for reducing friction or for absorbing frictional heat. Because seawater or water vapor in the external air easily enters the space between the inner surface and the outer cable, preferably, the outer surface of the inner cable and the inner surface of the outer cable are waterproofed.

In a case where the inner cable or the outer cable is made of a metal material, it is effective to perform swaging (hardening) to increase the hardness of the material.

Moreover, it is effective that the surface of the outer cable is processed with ultraviolet-resistant coating, waterproofing, salt-proofing, or a combination of the processes, because the outer surface is exposed to the external air.

In many cases, the reciprocating mechanism including the inner cable and the outer cable is supposed to have a curved path, because the reciprocating mechanism is disposed between the fluid receiving mechanism and the electric power generation mechanism. Therefore, preferably, the outer cable includes a curved portion corresponding to the path, and the inner cable performs reciprocating motion while passing through the curved portion. The lengths of the inner cable and the outer cable are set in accordance with the distance between the fluid receiving mechanism and the electric power generation mechanism, and the inner cable and the outer cable can be used for any length from a short distance to a long distance. The inner cable and the outer cable can be used in any environment, such as underwater, underground, or midair environment.

The reciprocating mechanism includes the outer cable and the inner cable. However, the outer cable and the inner cable are not limited to only one set. It is needless to say that the reciprocating mechanism may include a plurality of sets of outer cables and inner cables, and may output power to the electric power generation mechanism by combining the outputs of these cables.

As described above, the reciprocating mechanism includes the tubular outer cable and the inner cable, which is inserted through the outer cable. Both end portions of the inner cable are exposed from the outer cable, and a rigid first mechanical power transmission element is attached to one of the exposed end portions. A first tubular guide member that contains and supports the first mechanical power transmission element is disposed on the fluid receiving mechanism side so that the first mechanical power transmission element can perform reciprocating motion. A rigid second mechanical power transmission element is attached to the other exposed end portion of the inner cable. A second tubular guide member that contains and supports the second mechanical power transmission element is disposed on the electric power generation mechanism side so that the second mechanical power transmission element can perform reciprocating motion.

When transmitting the motion of the fluid receiving mechanism to the reciprocating mechanism, the motion of the fluid receiving mechanism is not directly received by one end portion of the flexible inner cable but is received by the rigid first mechanical power transmission element, and thereby the first mechanical power transmission element efficiently transmits the motion of the fluid receiving mechanism to the inner cable. Accordingly, here, the term "rigid" refers to the quality of a material that is not easily deformed when receiving the motion of the fluid receiving mechanism. The shape of the mechanical power transmission element is generally cylindrical but is not limited to this. The first tubular guide member is a tubular member that guides the reciprocating motion of the first mechanical power transmission element.

When transmitting the motion of the flexible inner cable to the electric power generation mechanism, motion of the inner cable is not directly transmitted to the electric power generation mechanism by the inner cable but is received by the rigid second mechanical power transmission element, and thereby the second mechanical power transmission element efficiently transmits the motion of the fluid receiving mechanism to the inner cable. Accordingly, here, the term "rigid" refers to the quality of material that is not easily deformed when transmitting the motion of the inner cable to the electric power generation mechanism. The mechanical power transmission element is generally cylindrical but is not limited to this. The second tubular guide member is a tubular member that guides the reciprocating motion of the second mechanical power transmission element.

Typically, an electric power generation mechanism converts a reciprocating mechanism into rotational motion and generates electric power on the basis of the rotational motion. However, a method of directly generating electric power on the basis of reciprocating motion without converting the reciprocating motion into rotational motion is known. This method can be also applied to the present invention.

Next, an example in which the present invention is applied to wind electric power generation will be described.

In the case of wind electric power generation, the flowing fluid is a wind, the fluid receiving mechanism is disposed in a region that receives the wind and performs rotational motion in accordance with motion of the wind, and the reciprocating mechanism performs the reciprocating motion on the basis of the rotational motion of the receiving mechanism. In the present invention, in order to transmit wind energy to the electric power generation mechanism that is located at a site different from that of the fluid receiving mechanism, the rotational motion of the fluid receiving mechanism is temporarily converted into reciprocating motion, and the reciprocating motion is reconverted into rotational motion. The wind electric power generation system includes a mechanism that changes the orientation of the fluid receiving mechanism in accordance with a change in the wind direction, and a connection portion that connects the fluid receiving mechanism and the reciprocating mechanism includes a mechanism that transmits the rotational motion of the fluid receiving mechanism to the reciprocating mechanism without transmitting motion corresponding to the change in the orientation of the fluid receiving mechanism.

In order to locate the wind receiving mechanism of wind electric power generation in midair, where wind power is large, the wind receiving mechanism is disposed in an upper part of a post. By disposing the post on a vibration-damping base, a negative effect of wind power on the post can be reduced by using the vibration-damping base.

Moreover, the post may include one ore more elastically deformable intermediate portions each of which is made from rubber, a spring, or the like. In this case, a portion of the post above the intermediate portions, that is, a portion in which the wind receiving mechanism is disposed, is swingable. Therefore, when the wind receiving mechanism receives excessive wind power, the wind power can be reduced.

In particular, in the present invention, only the fluid receiving mechanism is disposed in the upper part of the tower, and the electric power generation mechanism, which is heavy, is not disposed in the upper part. Therefore, the weight of the upper part can be reduced. As a result, a tower including a vibration-damping base and an elastically deformable intermediate portion made from rubber, a spring, or the like can be easily designed at a low cost.

Next, an example in which the present invention is applied to a wave electric power generation system will be described.

In a wave electric power generation system, the flowing fluid is seawater; the fluid receiving mechanism includes a float that is disposed on a sea surface and that performs up-and-down motion in accordance with up-and-down motion of the sea surface and a plate member that is disposed below the float with a gap, which allows seawater to flow thereinto, between the float and the plate member; and the inner cable is connected to the float. The float has buoyancy with which the float floats on the surface of seawater, and performs up-and-down motion in accordance with up-and-down motion of the sea surface. When the sea surface rises, the float responsively moves upward in accordance with the rising force. When the sea surface falls, the responsiveness of the float to the fall of the sea surface is low. Therefore, a member that has a surface facing the float is disposed below the float; a gap, which allows seawater to flow thereinto, is formed between the float and the surface facing the float; and the weight of the float is increased by using seawater that has entered and fully occupied the gap. Thus, responsiveness of the float when the sea surface falls is increased, the inner cable can appropriately move downward also when the sea surface falls, and this motion can be efficiently transmitted to the electric power generation mechanism. In the present invention, it is sufficient that a surface that is separated from the float with a gap therebetween is formed below the float. The surface is not limited to a planar surface and may be a curved surface, such as a concave surface, an irregular surface, or the like. It is sufficient that the member having this surface has a surface that faces a surface or the float. Examples of such a member also include a member having a side surface and a member in which a hole is formed.

When the float of the wave power receiving mechanism directly receives a change in the tide level, the stroke of the up-and-down motion of the wave power receiving mechanism becomes large, and the size of the wave power receiving mechanism increases. In order to solve this problem, it is preferable that a tide receiving mechanism, which is different from the wave power receiving mechanism, be provided. That is, the tide receiving mechanism includes a float that performs up-and-down motion in accordance with up-and-down motion of the sea surface and that is different from the float of the fluid receiving mechanism and up-and-down motion transmitting means that transmits the up-and-down motion of the float to the fluid receiving mechanism. By connecting he tide receiving mechanism to the wave power receiving mechanism, the up-and-down motion of the tide receiving mechanism is transmitted to the wave power receiving mechanism. As a result, the stroke of the up-and-down motion of the wave power transmission mechanism can be made smaller than a change in the tide level, and the size of the wave power transmission mechanism can be made compact.

In the wave electric power generation system, the width of the reciprocating motion of the inner cable is not constant and the reference position of the reciprocating motion changes. Therefore, in the electric power generation mechanism, it is effective to use a mechanism including a combination of a gear mechanism and a rack as a mechanism for converting reciprocating motion of the inner cable into rotational motion. That is, the electric power generation mechanism includes a rack that includes a tooth array and that moves in a first direction and a second direction in accordance with the reciprocating motion of the reciprocating mechanism, a gear mechanism that meshes with the tooth array and rotates on the basis of movement of the rack in at least one of the first direction and the second direction, a mechanical power transmission shaft that rotates in accordance with rotation of the gear mechanism, and an electric power generator that generates electric power on the basis of rotation of the mechanical power transmission shaft; and the electric power generation mechanism can convert reciprocating motion of the inner cable into rotational motion and can efficiently generate electric power on the basis of the rotational motion.

To be specific, the gear mechanism includes a first gear train that meshes with the tooth array and that rotates the mechanical power transmission shaft on the basis of movement of the rack in the first direction, and a second gear train that meshes with the tooth array and that rotates the mechanical power transmission shaft on the basis of movement of the rack in the second direction. The first gear train includes an odd number of gears, the second gear train includes an even number of gears, and a rotation direction in which the first gear train rotates the mechanical power transmission shaft when the rack moves in the first direction coincides with a rotation direction in which the second gear train rotates the mechanical power transmission shaft when the rack moves in the second direction. The first gear train includes a first gear including a first unidirectional clutch that transmits mechanical power generated by the movement of the rack in the first direction to the mechanical power transmission shaft and that does not transmit mechanical power generated by the movement of the rack in the second direction to the mechanical power transmission shaft, and the second gear train transmits mechanical power generated by the movement of the rack in the second direction to the mechanical power transmission shaft and transmits mechanical power generated by the movement of the rack in the first direction to the mechanical power transmission shaft.

As a flowing fluid in the present invention, in addition to wind and seawater (wave power) described above, for example, water, such as waterflow that occurs around a ship or river flow, can be used. That is, the fluid receiving mechanism performs rotational motion in accordance with waterflow that occurs around a ship or river flow, the reciprocating mechanism performs the reciprocating motion on the basis of the rotational motion of the receiving mechanism, and the electric power generation mechanism can generate electric power by converting the reciprocating motion into rotational motion.

### Advantageous Effects of Invention

With the present invention, the electric power generation mechanism, which converts the energy of a flowing fluid, such as wind power or wave power, into electric power, is located at a site different from a site that receives the energy of the flowing fluid, such as wind power or wave power, and thereby the entirety of the electric power generation system is prevented from being subjected to abnormal winds or abnormal waves of a typhoon or the like. Moreover, since the electric power generation mechanism of the electric power generation system is located at a site different from a site that receives the energy of a flowing fluid, such as wind power or wave power, the number of devices that are located at a site subjected to abnormal winds and abnormal waves of a typhoon or the like can be reduced to the minimum and the weight of the devices can be reduced. As a result, it is possible to provide an electric power generation system that can take more effective safety measures against abnormal winds and abnormal waves of a typhoon or the like (prevention of breakage of the wind electric power generation device and prevention of drifting of the wave electric power generation device).

To be specific, in the reciprocating mechanism used in the electric power generation system according to the present invention, the inner cable moves along the inner wall of the outer cable. Therefore, even if the shape of the outer cable is not straight but is curved, a displacement at one end of the inner cable occurs at the other end. By performing a design for reducing friction between the inside of the outer cable and the inner cable and by appropriately setting the flexibility and strength of the outer cable and the inner cable, it is possible to transmit a displacement over a long distance, such as several tens of meter or several hundreds of meters. In particular, in the reciprocating mechanism used in the present invention, the inner cable is slidably inserted through the outer cable and has a flexible structure. Therefore, even if the reciprocating mechanism is located at a site where the landform is complex, such as a coastal region or a mountainous region and there is a bend such as a curved portion, the reciprocating mechanism can transmit energy. The features of the present invention, in which the freedom in location conditions is increased, provides a great advantage in that, in constructing an electric power plant, the cost of setting up the system is reduced and limitation on the location reduced.

In particular, in the wind electric power generation system according to the present invention, in the machine chamber, which is connected to the blade and disposed at a high position, the motion converter, which includes a crank mechanism or a gear convert mechanism and which has a lightweight structure, is disposed instead of an electric power generator. Thus, limitation due to the strength or the cost of the post, which may be imposed by an increase in the size of the blade, is removed. Therefore, it is possible to increase the rated output power by increasing the size of the blade.

Moreover, because the electric power generator can be located at any appropriate position on land, it is possible to use a large electric power generator or a general-purpose electric power generator. Needless to say, this is effective for improving the economical efficiency of wind electric power generation.

Because a rubber connector or a spring-shaped connector can be used, instead of a strong material, as a part or the entirety of the post, the post itself can absorb vibrations caused by an impact of a typhoon and the like, and it is possible to reduce the risk that the post becomes broken. By using a vibration damper, a vibration-damping base, or the like, it can be expected that low-frequency vibrations, which are causing environment problems, are reduced.

In wave electric power generation, by using the reciprocating mechanism for transmission to the electric power generation mechanism, only the reciprocating mechanism, which converts natural energy into mechanical reciprocating energy, is located on the sea or near the coast, and the reciprocating energy is transmitted over a long distance by using the reciprocating mechanism. By doing so, for example, it is possible to locate an electric power generation facility, which is massive and requires high construction cost, at a site where destructive energy on the sea, which may occur due to an abrupt natural phenomenon, does not reach. Thus, even if an unexpected natural phenomenon occurs on the sea, damage to the facilities is limited to the energy converter, which is small and unexpansive, and to end portions of the reciprocating mechanism. Therefore, it is possible to reduce damage or breakage of the electric power generation system, which may occur due to a typhoon, abnormal waves, or a natural disaster, such as a giant tsunami or the like, to the minimum.

In addition, with the electric power generation system according to the present invention, in wave electric power generation, only the energy converter is located near the bottom of a cliff. Therefore, the electric power generation system has an advantage in that it does not have problems regarding the navigation safety of ships and the fishing environment, in contrast to existing technologies, with which a massive facility is located at a site where fishing boats and the like pass, such as an offshore site or the inside of the bay.

Moreover, with the electric power generation system according to the present invention, in wave electric power generation, construction of the electric power generation device, which converts reciprocating energy transmitted by the reciprocating mechanism into electric power, and the surrounding plant is performed not on the sea where construction work is difficult, as in existing technologies, but on land. Therefore, the electric power generation system has an advantage in that construction is easily and an increase in construction cost can be avoided.

With the water electric power generation system for a ship according to the present invention, the motion converter that has a simple structure and includes a propeller for receiving water power, a rotor unit, and a crank mechanism or a gear conversion mechanism, instead of an electric power generator, is disposed in water. Therefore, waterproofing and the like can be easily performed and the size of the water electric power generation system can be reduced. With the present invention, the electric power generator can be disposed on the deck of a ship or the like. Therefore, a large electric power generator or a general-purpose electric power generator can be used. Needless to say, this increases the practicality of marine water power generation, reduces base load cost, and increases the economic efficiency of ship navigation.

### Brief Description of Drawings

FIG. 1 is an overall schematic view of a wind electric power generation system according to a first embodiment of the present invention.
FIG. 2 illustrates a connection mechanism that connects a fluid receiving mechanism of the wind electric power generation system and a reciprocating mechanism and a connection mechanism that connects the reciprocating mechanism and an electric power generation mechanism.
FIG. 3 illustrates the operations of the connection mechanisms.
FIG. 4 illustrates the reciprocating mechanism, part (a) is a longitudinal sectional view of an outer cable and an inner cable, and part (b) is a cross-sectional view of the outer cable and the inner cable.
FIG. 5(a) and FIG. 5(b) illustrate the operation of the connection mechanism that connects the fluid receiving mechanism of the wind electric power generation system and the reciprocating mechanism.
FIG. 6(a) is an enlarged view of both end portions of the reciprocating mechanism, and FIG. 6(b) is an enlarged view of a mechanism that is included in the connection mechanism connecting the fluid receiving mechanism and the reciprocating mechanism and that enables conversion of rotational motion of the receiving mechanism into reciprocating motion even when the orientation of the receiving mechanism changes in accordance with a change in the wind direction.
FIG. 7 illustrates a connection mechanism that connects the fluid receiving mechanism and the reciprocating mechanism.
FIG. 8 is an overall schematic view of a wind electric power generation system according to a second embodiment of the present invention.
   is.
FIG. 9 illustrates a connection mechanism that connects a fluid receiving mechanism of the wave electric power generation system and a reciprocating mechanism.
FIG. 10 illustrates the operation of the connection mechanism.
FIG. 11 illustrates a connection mechanism that connects a fluid receiving mechanism of the wave electric power generation system and a reciprocating mechanism according to another embodiment.
FIG. 12 illustrates a fluid receiving mechanism of a wave electric power generation system that includes a plurality of the mechanisms shown in FIGS. 8 to 10 or the mechanisms shown in FIG. 11 and that combines power.
FIG. 13 illustrates a connection mechanism that connects a reciprocating mechanism of the wave electric power generation system and an electric power generation mechanism.
FIG. 14 illustrates another connection mechanism that connects the reciprocating mechanism of the wave electric power generation system and the electric power generation mechanism, part (a) is a plan view, and part (b) is a side view.
FIG. 15 is a schematic view of a water electric power generation system for a ship seen from a side of the ship.
FIG. 16 is a schematic view of the system seen from the front side of the ship.

### Description of Embodiments

Hereinafter, embodiments of the present invention will be described.

### Embodiment 1

### (Wind Electric Power Generation System)

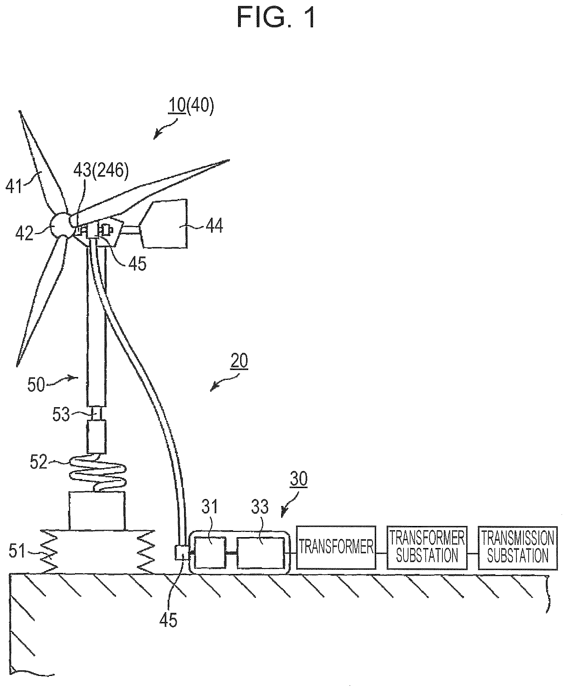

FIG. 1 is an overall schematic view of a wind electric power generation system. The wind electric power generation system includes a wind receiving mechanism (10), a reciprocating mechanism (20), and an electric power generation mechanism (30). The wind receiving mechanism (10) includes a rotation mechanism (40), which is rotated by wind power, and a post (50), which is used to dispose the rotation mechanism at a high position. To put it simply, the rotation mechanism (40) differs from known wind electric power generation systems in that it does not have an electric power generation mechanism, such as an electric power generator or a speed increasing device. In other respects, the rotation mechanism (40) is substantially the same as known electric power generation systems. That is, the rotation mechanism (40) includes a blade (41), a hub (42), a rotor wheel (246), a wind-direction-adjustment device (44), a brake device (not shown), an anemometer (not shown), a lightning rod (not shown), and the like. Detailed descriptions of the structures and functions of these devices, which are substantially the same as those of known electric power generation systems, are omitted.

The post (50) is set up on an area on the ground via a base (51), including a vibration damping rubber and the like. A spiral spring-shaped portion (52), which includes a vibration damping rubber and the like, is disposed in a middle part of the post. The base (51) and the spring-shaped portion (52) absorb low-frequency vibrations. The post (50) includes a wind pressure reducer (53), which is made of an elastically deformable rubber or the like, in a middle part (intermediate portion) thereof. When receiving a wind pressure of a predetermined level or higher, the wind pressure reducer (53) becomes curved due to the wind pressure in a direction such that the wind pressure is reduced. Thus, when receiving excessive wind power, an upper part of the post, above the intermediate portion, swings so that the post may not become broken or the wind receiving mechanism, which is disposed in the upper part of the post, may not become seriously damaged. With such a structure, the wind electric power generation system can reliably withstand a harsh environment. Moreover, the weight of the receiving mechanism is reduced by separating the electric power generation mechanism from the receiving mechanism. Therefore, the cost of the receiving mechanism is low, although the base (51), including a vibration damping rubber and the like, the spring-shaped portion (52), and the wind pressure reducer (53) are attached.

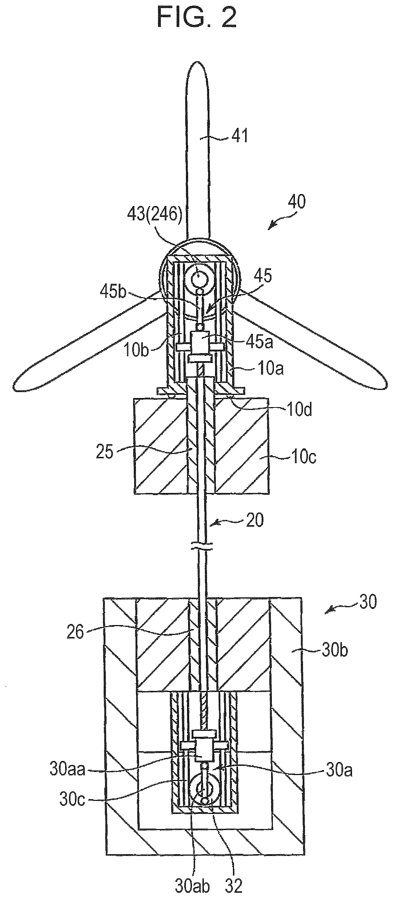

The reciprocating mechanism (20) converts rotational motion generated by the wind receiving mechanism (10) into reciprocating motion, and transmits the reciprocating motion to the electric power generation mechanism (30). The details of the reciprocating mechanism (20) will be described below with reference to FIG. 2 and other figures.

The electric power generation mechanism (30) is located at a site different from that of the rotation mechanism (40), which is located on the post (50). For example, the electric power generation mechanism (30) is located on a part of land that is not affected by a harsh natural environment. The electric power generation mechanism (30) generates electric power by converting reciprocating motion, which is transmitted from the rotation mechanism (40), into rotational motion. The electric power generation mechanism (30) has substantially the same structure as those of known wind electric power generation mechanisms, except that the electric power generation mechanism (30) is located at a site different from that of the wind receiving mechanism (10), such as on land, and except that the electric power generation mechanism (30) includes a mechanism that converts reciprocating motion into rotational motion. The electric power generation mechanism (30) includes a speed increasing device (31), a mechanical power transmission wheel (32), and an electric power generator (33). Electric power generated by the electric power generator is transmitted to a transformer, a transformer substation, and a transmission substation. Alternatively, the electric power may be stored in an electrical storage device. Detailed descriptions of the structures, functions, and operations of the apparatuses and facilities of the electric power generation mechanism, which are substantially the same as those of known electric power generation mechanisms, are omitted here.

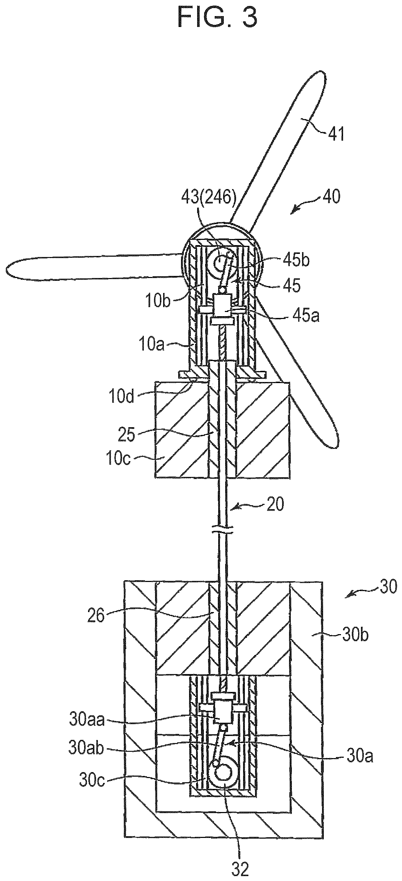

FIGS. 2 and 3 illustrate a mechanical power transmission mechanism for transmitting mechanical power from the rotation mechanism (40) of the wind receiving mechanism (10) to the reciprocating mechanism (20) and a mechanical power transmission mechanism for transmitting mechanical power from the reciprocating mechanism (20) to the electric power generation mechanism (30). Regarding the mechanical power transmission mechanism for transmitting mechanical power from the rotation mechanism (40) to the reciprocating mechanism (20), a piston-crank mechanism (45), which converts rotation of the rotor wheel (246) into reciprocating motion, is attached to the rotation mechanism (40). The piston-crank mechanism (45) includes a piston (45(a)) and a crank (45(b)). The piston (45(a)) is guided by a pair of guide shafts (10b), which are attached to a housing (10a) of the wind receiving mechanism (10), so that the piston (45(a)) can perform reciprocating motion. The crank (45(b)) connects the rotor wheel (246) and the piston (45(a)). With such a structure, the piston (45(a)) performs reciprocating motion along the guide shafts (10b) in accordance with rotational motion of the rotor wheel (246).

The housing (10a) is placed on a base (10c) via a bearing (10d), and when the wind direction changes, the wind-direction-adjustment device (44) rotates relative to the base (10c) due to a rotational force generated by receiving the wind. Due to the rotation, the orientation of the housing (10a), that is, the orientation of the blade (41) is changed. The reciprocating mechanism (20) is connected to the piston (45(a)) of the piston-crank mechanism (45) and performs reciprocating motion together with the piston (45(a)).

Next, the mechanical power transmission mechanism for transmitting mechanical power from the reciprocating mechanism (20) to the electric power generation mechanism (30) basically has a structure opposite to that of the mechanical power transmission mechanism for transmitting mechanical power from the rotation mechanism (40) of the wind receiving mechanism (10) to the reciprocating mechanism (20). That is, reciprocating motion of the reciprocating mechanism (20) is converted into rotational motion via a piston crank (30a) of the electric power generation mechanism (30). The piston crank (30a) includes a piston (30aa) and a crank (30ab). The piston (30aa) is guided by a pair of guide shafts (30c), which are attached to a housing (30b), so that the piston (30aa) can perform reciprocating motion. The crank (30ab) connects the mechanical power transmission wheel (32), which is connected to the speed increasing device (31), and the piston (30aa). With such a structure, the piston (30aa) performs reciprocating motion along the guide shafts (30c) in accordance with reciprocating motion of the reciprocating mechanism (20). Moreover, the mechanical power transmission wheel (32) performs rotational motion in accordance with the reciprocating motion of the piston (30aa).

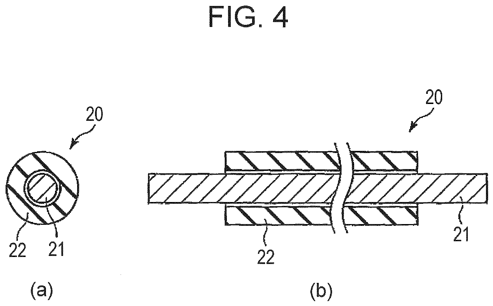

As illustrated in FIG. 4, the reciprocating mechanism (20) includes an inner cable (21) and a tubular outer cable (22). The outer cable (22) is disposed between the wind receiving mechanism (10) and the electric power generation mechanism (30). The inner cable (21) is inserted through the outer cable (22) and connected to the wind receiving mechanism (10) and to the electric power generation mechanism (30). In accordance with motion of the wind receiving mechanism (10), the inner cable (21) performs reciprocating motion in the outer cable (22) and transmits the reciprocating motion to the electric power generation mechanism. Both end portions of the inner cable (21) are exposed from the outer cable (22).

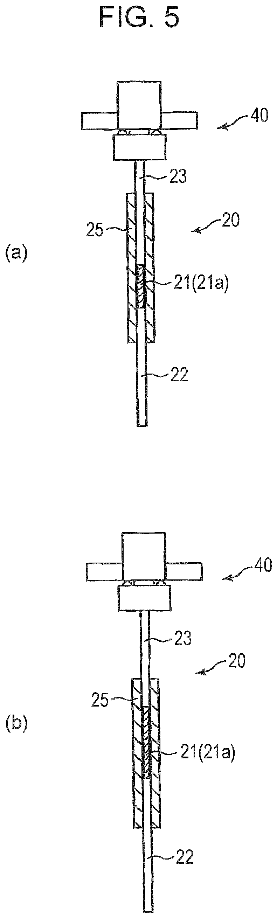

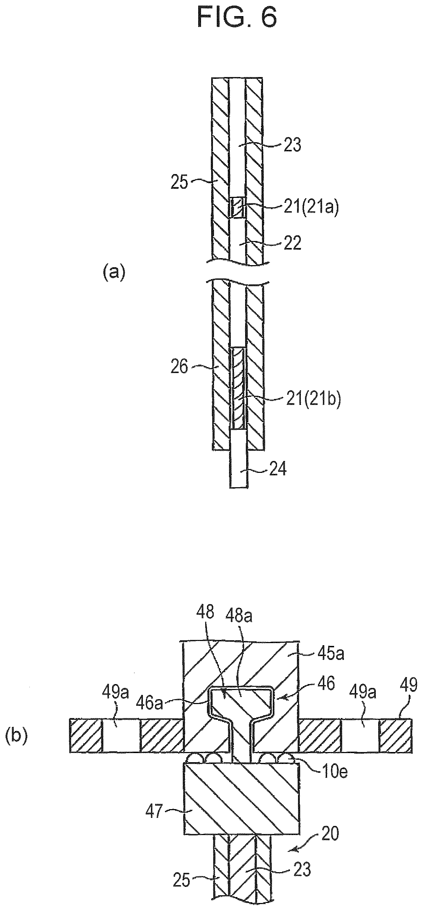

FIG. 5 shows enlarged views of a mechanical power transmission portion for transmitting mechanical power from the rotation mechanism (40) of the wind receiving mechanism (10) to the reciprocating mechanism (20). FIG. 5(a) corresponds to FIG. 2, and FIG. 5(b) corresponds to FIG. 3. FIG. 5(a) is an enlarged view of both end portions of the reciprocating mechanism (20). Both end portions (21a) and (21b) of the inner cable (21) are exposed from the outer cable (22) (regarding the numeral 21b, see FIG. 6(a)). Rigid mechanical power transmission elements (23) and (24) are respectively attached to both exposed end portions (21a) and (21b) of the inner cable (21) so as to be coaxial with the inner cable. Moreover, rigid tubular guides (25) and (26) are disposed in the housing (10a) of the wind receiving mechanism (10) and the housing (30b) of the electric power generation mechanism (30). The tubular guides (25) and (26) contain the mechanical power transmission elements (23) and (24) and guide the mechanical power transmission elements (23) and (24) so that the mechanical power transmission elements (23) and (24) can move (or can slide) in the axial direction. By using the combination of the mechanical power transmission elements (23) and (24) and the tubular guides (25) and (26), the rotational motion of the wind receiving mechanism (10) is reliably transmitted to the inner cable (21), and the reciprocating motion of the inner cable (21) is reliably transmitted to the rotation mechanism of the electric power generation mechanism (30). The mechanical power transmission elements (23) and (24) and the tubular guides (25) and (26) can be made from, for example, a metal material.

The tubular guide (25) is fixed to the housing (10a) directly or via another member. The tubular guide (26) is fixed to the housing (30b) directly or via another member. With such a structure, the inner cable (21) can be prevented from becoming buckled at both end portions (21a) and (21b) of the inner cable (21), which are exposed from the outer cable (22). Moreover, as described above, the wind receiving mechanism (10) has a function of changing its orientation in accordance to the wind direction. Therefore, twisting of the inner cable (21) may occur. In the present embodiment, twisting of the inner cable (21) is prevented by using a structure shown in an enlarged view of FIG. 6(b).

In FIG. 6(b), the piston (45(a)) includes a containing portion (46) (containing space). The containing portion (46) has an opening in its end surface facing the reciprocating mechanism (20). The containing portion (46) includes an enlarged diameter portion (46(a)), which is inside the containing portion (46) and which has a diameter larger than that of the opening in the end surface. A connection member (47) is attached to an end portion of the tubular guide (25). The connection member (47) includes a protruding portion (48) on a side opposite to a surface to which the tubular guide (25) is attached. The protruding portion (48) has a shape that is complementary to the containing portion (46), that is, a shape in which a distal end portion (48a) has an enlarged diameter. The distal end portion (48a) is contained in the enlarged diameter portion (46(a)) of the containing portion (46).

A gap is formed between the protruding portion (48) and the containing portion (46), and thereby the protruding portion (48) can rotate in the containing portion (46). Moreover, a bearing (10e) is disposed on an end surface of the connection member (47) facing the piston (45(a)).

In such a structure, the piston (45(a)) can rotate relative to the connection member (47), while movement (extraction) of the connection member (47) relative to the piston (45(a)) in the up-and-down direction in FIG. 6(b) is suppressed. That is, it is possible to connect the piston (45(a)) and the inner cable (21) while preventing twisting of the inner cable (21) due to rotation of the wind receiving mechanism (10).

In FIG. 6(b), a guide member (49) is attached to the piston (45(a)). The guide member (49) has a pair of through-holes (49a) through which the guide shafts (10b) are inserted.

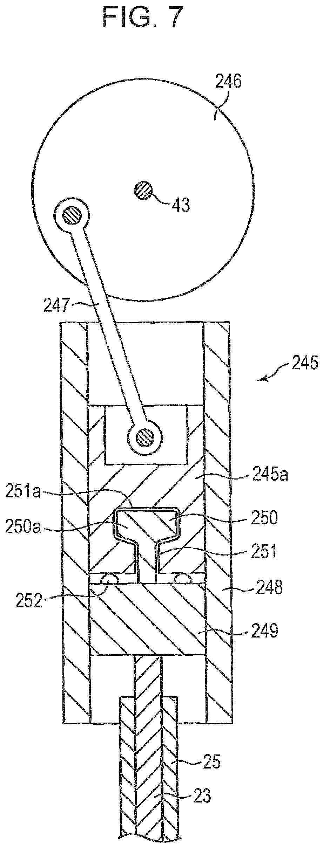

FIG. 7 is a sectional view of another example of a piston-crank mechanism. A piston-crank mechanism (245) includes a piston (245(a)), a rotor wheel (246) that rotates together with a rotor shaft (43), a crank (247) that connects the piston (245(a)) and the rotor wheel (246), a cylinder (248) that contains the piston (245(a)) so that the piston (245(a)) can perform up-and-down motion, and a connection member (249) that is contained in the cylinder (248) together with the piston (245(a)).

The tubular guide (25) and the mechanical power transmission element (23) are connected to one end of the connection member (249). A protruding portion (250), which includes a distal end portion (250a) having an enlarged diameter, is disposed at the other end of the connection member (249). The piston (245(a)) has a containing portion (251), which has a shape complementary to the protruding portion (250). The containing portion (251) includes an enlarged diameter portion (251a), which has a larger diameter so that the distal end portion (250a) can be fitted into the enlarged diameter portion (251a), and the distal end portion (250a) is contained in the enlarged diameter portion (251a).

A gap is formed between the protruding portion (250a) and the containing portion (251a), and thereby the protruding portion (250) can rotate in the containing portion (251). Moreover, a bearing (252) is disposed on an end surface of the connection member (249) facing the piston (245(a)). In such a structure, as the rotor wheel (246) rotates, the piston (245(a)) moves up and down in the cylinder (248). Also with the structure shown in FIG. 7, it is possible to connect the piston (245(a)) and the inner cable (21) while preventing twisting of the inner cable (21) due to rotation of the wind receiving mechanism (10).

### Embodiment 2

### (Wave Electric Power Generation System)

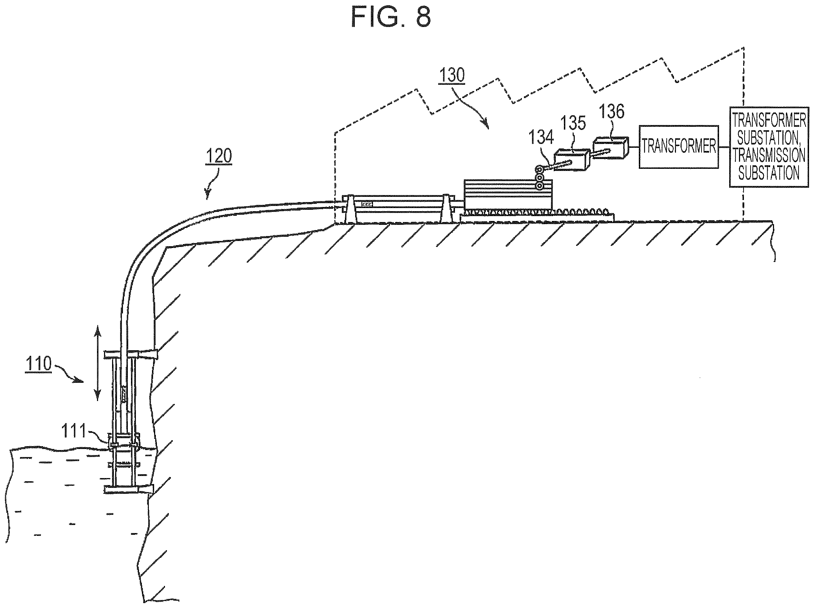

FIG. 8 is an overall schematic view of a wave electric power generation system. The wave electric power generation system includes a wave power receiving mechanism (110), a reciprocating mechanism (120), and an electric power generation mechanism (130). The wave power receiving mechanism (110) is configured so that a float (111) is disposed in a sea-surface region and moves up and down in accordance with up-and-down motion the sea surface. The reciprocating mechanism (120) transmits the up-and-down motion of the float (111) as reciprocating motion, the electric power generation mechanism (130) converts the reciprocating motion into rotational motion, and thereby electric power is generated.

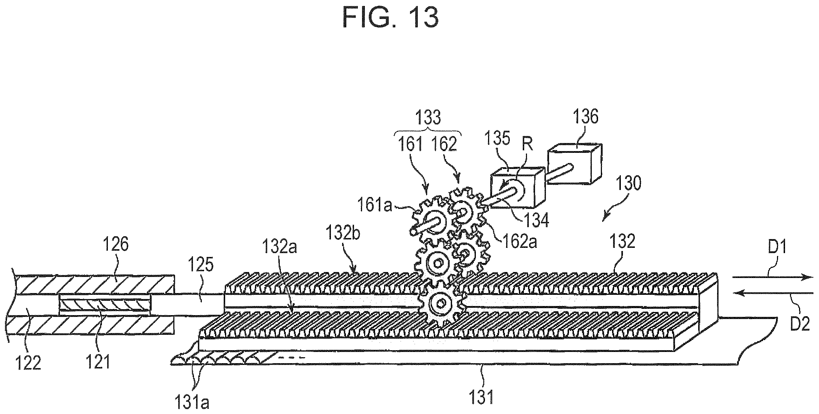

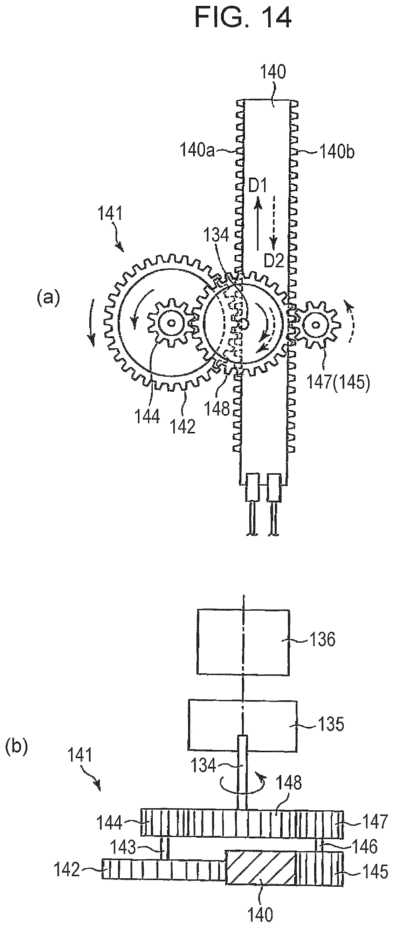

As in the embodiment 1, the electric power generation mechanism (130) includes a mechanism that converts reciprocating motion into rotational motion (this mechanism will be described in detail below with reference to FIGS. 13 and 14), a mechanical power transmission shaft (134), a speed increasing device (135), and an electric power generator (136). Electric power generated by the electric power generator (136) is transmitted to a transmission substation via a transformer and a transformer substation. Alternatively, the electric power may be stored in an electrical storage device. The structures, functions, and operations of apparatuses and facilities of the electric power generation mechanism are substantially the same as those of known electric power generation mechanisms, except that a mechanism for changing reciprocating motion into rotational motion is provided. Therefore, detailed descriptions are omitted here.

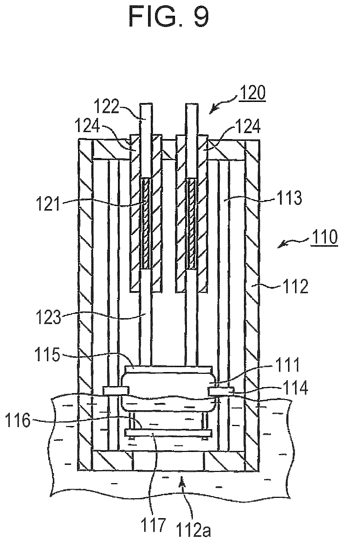

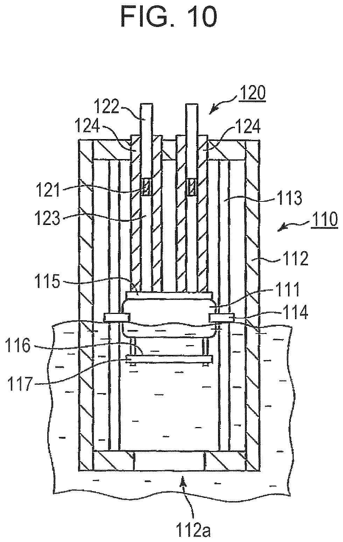

FIGS. 9 and 10 illustrate a connection mechanism that connects the wave power receiving mechanism (110) of the wave electric power generation system and the reciprocating mechanism (120). FIG. 9 illustrates a state when the sea surface falls, and FIG. 10 illustrates a state when the sea surface rises. In the wave power receiving mechanism (110), one or more guide rings (114) are attached to the float (111). One or more guide rods (113) are attached to a housing (112), which is attached to a wall that is in contact with the sea surface, in the up-and-down direction (the direction in which the sea surface rises and falls. The guide rods (113) are inserted through the guide rings (114). With such a structure, the guide rods (113) guide the float (111) via the guide rings (114) in the up-and-down direction. As a result, the float (111) moves up and down in accordance with up-and-down motion of the sea surface. A plate member (117), which has a facing surface (116) facing the float (111) with a predetermined distance therebetween, is attached to a portion below the float (111). Thus, a gap, which allows seawater to flow thereinto, is formed between the float (111) and the facing surface (116). An opening (112a) is formed in a bottom plate of the housing (112). With the opening (112a), flow of seawater toward the float (111) and flow of seawater in the opposite direction are not blocked, and the float (111) can smoothly move up and down. The numeral 115 denotes an upper plate member that is attached to the upper surface of the float (111).

The reciprocating mechanism (120) includes inner cables (121) and tubular outer cables (122), through which the inner cables (121) are inserted. The inner cables (121) can perform reciprocating motion (for example, while sliding) in the outer cables (122). Lower end portions of the inner cables, which are connected to the wave power receiving mechanism (110), are exposed from the outer cables (122). Rigid mechanical power transmission elements (123) are attached to the exposed end portions of the inner cables (121) so as to be coaxial with the inner cables (121). The mechanical power transmission elements (123) are attached to the upper plate member (115). Tubular guides (124) are disposed in the housing (112), and the mechanical power transmission elements (123) perform reciprocating motion in the tubular guides (124).

Because a space between the lower surface of the float (111) and the upper surface (116) (surface facing the float with a gap therebetween) of the plate member (117) is located below the float (111), the space is below the sea surface and filled with seawater. When the sea surface rises, the sea surface does not affect upward motion of the float, because the sea surface has the same specific gravity as seawater. When the sea surface falls, the response of the float to this motion is low and a force that moves the float downward is small, because the float has a lower specific gravity than seawater. However, the seawater in the space between the lower surface of the float (111) and the upper surface (116) of the plate member (117) functions as a weight when the sea surface falls and thereby increases the response of the float and increases the force that moves the float (111) downward. As a result, the reciprocating mechanism (120) can effectively perform reciprocating motion.

Although not illustrated, a spring or the like may be disposed in the vicinity of a connection portion between the float (111) and the reciprocating mechanism (120). By doing so, it is possible to provide a mechanism that adjusts, by using the force of the spring, the difference in response (the difference in torque) between a time when the sea surface rises and a time when the sea surface falls.

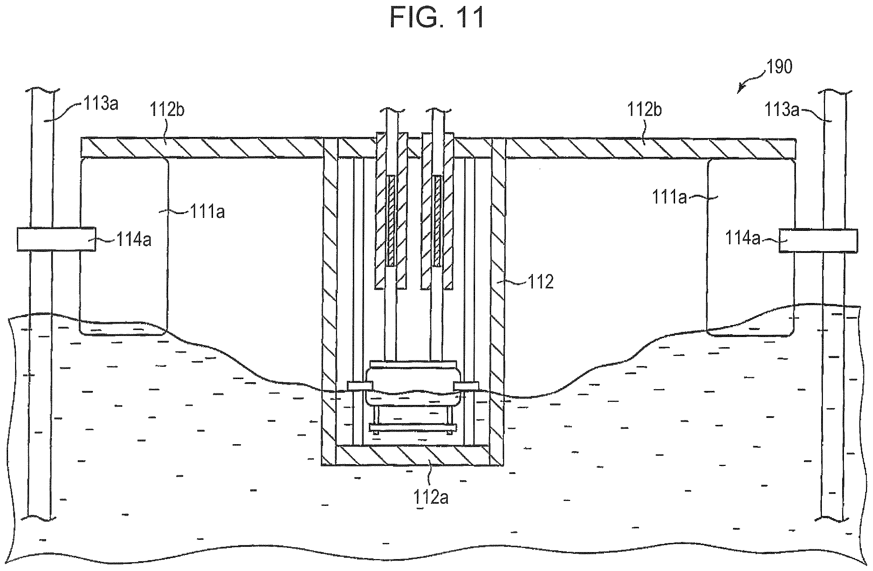

FIG. 11 illustrates a connection mechanism according to another embodiment, which is different from the connection mechanism shown in FIGS. 8, 9, and 10. The connection mechanism shown in FIGS. 8, 9, and 10 has a structure in which the wave power receiving mechanism, which is a fluid receiving mechanism, is directly attached to a wall that is in contact with the sea surface. In the connection mechanism shown in FIG. 11, the wave power receiving mechanism is not directly attached to the wall in contact with the sea surface but is attached to the wall via a tide receiving mechanism (190). That is, the tide receiving mechanism (190) includes a pair of guide rods (113a) that are fixed, in the up-and-down direction, to the wall in contact with the sea surface via a fixing member (not shown), guide rings (114a) through which the guide rods (113a) are inserted so that the guide rings (114a) can perform up-and-down motion, and floats (111a) that are attached to the guide rings (114a). The housing (112) has an upper plate extending toward the floats (111a), and the floats (111a) are attached to the extended parts of the upper plate (112b) (corresponding to up-and-down motion transmitting means in the present invention).

When the tide receiving mechanism (190) is attached to the wave power receiving mechanism, the floats (111a), which are attached to the guide rods (113a) via the guide rings (114a), move up and down in accordance with change in the tide level. The up-and-down motion is transmitted to the wave power receiving mechanism. As a result, an advantage is obtained in that the stroke of the up-and-down motion of the float (111) of the wave power receiving mechanism can be reduced and the size of the wave power receiving mechanism can be made compact.

In this example, the tide receiving mechanism includes a pair of guide rods. However, the tide receiving mechanism may include one guide rod or three or more guide rods. In this example, the guide rods are disposed at positions that oppose each other. However, the guide rods may be disposed side by side.

Regarding the embodiment shown in FIG. 11, description of portions that overlaps those of FIGS. 9 and 10 are omitted and numerals in the figure are also omitted.

### (Embodiment 2-1)

The embodiment presented in the present specification is a wave electric power generation system including one set of an inner cable and an outer cable. However, the wave electric power generation system may include two or more sets of inner cables and outer cables. For example, by using a combination of plurality of fluid receiving mechanisms and reciprocating mechanisms so as to combine power to at least one reciprocating mechanism, the combined reciprocating motion may be transmitted to the electric power generation mechanism. With the electric power generation system, by using a combination of a plurality of fluid receiving mechanisms so as to combine power, it is possible to increase the energy, to realize an appearance taking the environment into account, and to increase the mass-productivity of facilities.

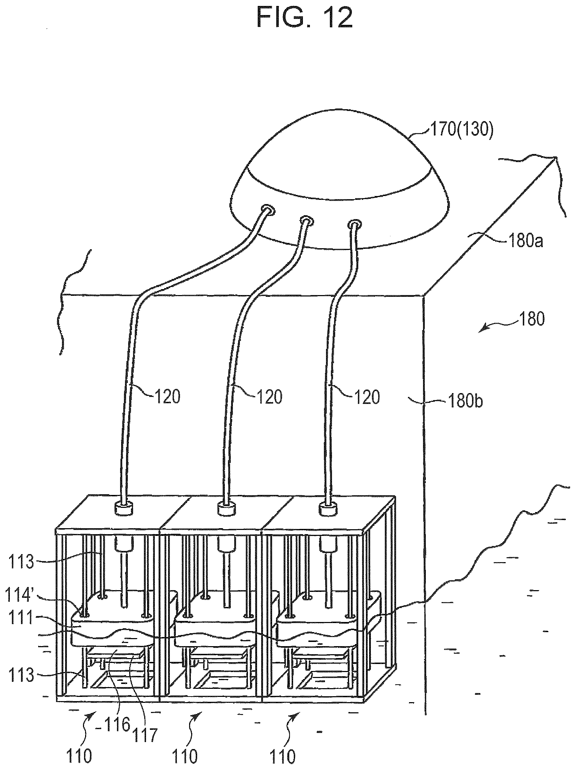

FIG. 12 illustrates an example of such a wave electric power generation system in use. In this figure, the wave electric power generation system includes a housing (170) in which the electric power generation mechanism (130) and the like are contained, a plurality of the wave power receiving mechanisms (110), and a plurality of the reciprocating mechanisms (120) that connect the housing (170) and the wave power receiving mechanisms (110). In the example shown in this figure, the housing (170) is disposed on an upper surface (180a) of a breakwater (180). The wave power receiving mechanisms (110) are attached to a side surface (180b) of the breakwater (180) and lower parts of the wave power receiving mechanisms (110) are immersed in seawater.

Mechanical power that is generated by up-and-down motion of the float (111) of each of the wave power receiving mechanisms (110) is transmitted to the housing (170) via a corresponding one of the reciprocating mechanisms (120). The housing (170) includes a power-combining mechanism (not shown) that combines mechanical power that is transmitted via the reciprocating mechanisms (120). The power-combining mechanism is, for example, a mechanism that connects the inner cable (121) of each of the reciprocating mechanism (120) to a rack (132) illustrated in FIG. 13. The electric power generation mechanism (130) can generate large electric power, because the mechanical power combined by the power-combining mechanism is greater than the mechanical power from each of the wave power receiving mechanisms (110).

The mechanical power transmission element (123) and the tubular guide (124) may be made from, for example, a metal material. By providing the mechanical power transmission element (125) and the tubular guide (126), as in the embodiment 1, the inner cable (121) can be prevented from becoming buckled at end portions of the inner cable (121), which are exposed from the outer cable (122).

The structure of each of the wave power receiving mechanisms (110) shown in FIG. 12 is slightly changed in design from the wave power receiving mechanism illustrated in FIGS. 9 and 10. However, the structures of these mechanisms are substantially the same and the functions of these mechanisms are also substantially the same. Therefore, portions having substantially the same structures are denoted by the same numerals and the detailed descriptions are omitted here. The difference in design between the wave power receiving mechanisms illustrated in FIG. 12 and the wave power receiving mechanism illustrated in FIGS. 9 and 10 is that, in the wave power receiving mechanism illustrated in FIG. 12, guide holes (114') are formed in the four corners of the float (111), and the guide rods (113), which are attached to the housing (112) in the up-and-down direction (in which the sea surface rises and falls), are inserted through the guide holes (114').

Another difference is that two reciprocating mechanisms are connected to the float (111) in FIGS. 9 and 10, while one reciprocating mechanism is connected to each of the floats (111) in FIG. 12.

The above description is a comparison with the FIGS. 9 and 10. Description of a comparison with FIG. 11, which is the same as above, is omitted here.

### (Embodiment 2-2)

FIG. 13 illustrates an example of a mechanism that converts reciprocating motion of the reciprocating mechanism (120) into rotational motion of the electric power generation mechanism (130). An end portion of the inner cable (121) on the electric power generation mechanism side is exposed from the outer cable (122), and the rigid mechanical power transmission element (125) is attached to this end portion so as to be coaxial with the inner cable. A rigid tubular guide (126), which contains the mechanical power transmission element (125) and which guides the mechanical power transmission element in the axial direction, is disposed on the electric power generation mechanism side. Thus, the reciprocating motion of the inner cable is reliably transmitted to a rotation device of the electric power generation mechanism.

The mechanical power transmission element (125) and the tubular guide (126) may be made from, for example, a metal material. By providing the mechanical power transmission element (125) and the tubular guide (126), as in the embodiment 1, the inner cable (121) can be prevented from becoming buckled at end portions of the inner cable (121), which are exposed from the outer cable (122).

Regarding the sea surface, because the tide occurs and the wave height constantly changes, the amplitude of the inner cable (121) and the reference position of the reciprocating motion of the inner cable (121) change with time. In order to adapt to this change, for example, a rack-and-pinion mechanism illustrated in FIG. 13 may be applied to the electric power generation mechanism (130).

In the example shown in this figure, the electric power generation mechanism (130) includes a slider (131), the rack (132), and a gear mechanism (133). The slider (131) includes, for example, a large number of rollers (131a) that are arranged along a line. The rack (132) is placed on the rollers (131a) and is connected to the mechanical power transmission element (125) of the reciprocating mechanism (120). Due to the reciprocating motion of the inner cable (121), the rack (132) moves in a first direction (D1) and in a second direction (D2), which is opposite to the first direction (D1), on the slider (131). In the example shown in FIG. 13, the first direction (D1) is a direction in which the rack (132) moves when the inner cable (121) is pushed due to the rise of the sea surface, and the second direction (D2) is a direction in which the rack (132) moves when the inner cable (121) is pulled due to the fall of the sea surface. The slider (131) and the rack (132) each have a sufficiently large length in the first direction (D1) and the second direction (D2) so that they can accommodate changes in the position of the sea surface caused by the tide or the like.

The rack (132) extends in a direction that crosses the first direction (D1) and the second direction (D2) and includes a first tooth array (132a) having a plurality of rack teeth and a plurality of second tooth arrays (132b). The second tooth array (132b) is disposed at a higher position than the first tooth array (132a), that is, at a position close to the mechanical power transmission shaft (134).

The gear mechanism (133) meshes with the tooth array of the rack (132) and rotates the mechanical power transmission shaft (134) on the basis of movement of the rack (132) in at least one of the first direction (D1) and the second direction (D2). In the present embodiment, the gear mechanism (133) includes a first gear train (161), which meshes with the first tooth array (132a) and rotates the mechanical power transmission shaft (134) on the basis of movement of the rack (132) in the first direction (D1); and a second gear train (162), which meshes with the second tooth array (132b) and rotates the mechanical power transmission shaft (134) on the basis of movement of the rack (132) in the second direction (D2). That is, in the present embodiment, the mechanical power transmission shaft (134) is rotated on the basis of movements of the rack (132) in both of the first direction (D1) and the second direction (D2).

For example, the first gear train (161) includes an odd number of (in FIG. 13, three) gears, and the second gear train (162) includes an even number of (in FIG. 13, two) gears. In this case, the rotation direction (R) in which the first gear train (161) rotates the mechanical power transmission shaft (134) when the rack (132) moves in the first direction (D1) coincides with the rotation direction (R) in which the second gear train (162) rotates the mechanical power transmission shaft (134) when the rack (132) moves in the second direction (D2).

An uppermost gear (161a), which is one of gears (pinions) included in the first gear train (161), is connected to the mechanical power transmission shaft (134). The gear (161a) includes a first one-way clutch (unidirectional clutch) that transmits mechanical power generated by movement of the rack (132) in the first direction (D1) to the mechanical power transmission shaft (134) and that does not transmit mechanical power generated by movement of the rack (132) in the second direction (D2) to the mechanical power transmission shaft (134). An uppermost gear (162a), which is one of gears (pinions) included in the second gear train (162), is connected to the mechanical power transmission shaft (134). The gear (162a) includes a second one-way clutch that transmits mechanical power generated by movement of the rack (132) in the second direction (D2) to the mechanical power transmission shaft (134) and that does not transmit mechanical power generated by movement of the rack (132) in the first direction (D1) to the mechanical power transmission shaft (134).

By using the rack-and-pinion mechanism having the structure described above, it is possible to continue generating electric power irrespective of changes in the position of the sea surface. Moreover, because the mechanical power transmission shaft (134) rotates in the same rotation direction (R) in either of the time when the sea surface rises and the time when the sea surface falls, it is possible to achieve a higher electric power generation efficiency compared to a case where electric power generation is performed in only one of the time when the sea surface rises and the time when the sea surface falls.

In FIG. 13, the rack (132) has the first tooth array (132a) and the second tooth array (132b). However, the rack (132) may have only one type of tooth array, and, by adjusting the diameter of gears included in the first gear train (161) and the second gear train (162), the difference in the height between the rack (132) and the mechanical power transmission shaft (134), which occurs due to the difference in the number of gears, may be accommodated. Although the electric power generation efficiency decreases, only one type of gear train may be used, and the mechanical power transmission shaft (134) may be rotated only in one of the time when the sea surface rises and the time when the sea surface falls.

An elastic member, which connects an end portion of the rack (132) opposite to an end portion to which the mechanical power transmission element (125) is attached and a structure that does not move together with the rack (132), may be disposed. In this case, for example, the elastic member is pulled and stores elastic energy when the rack (132) moves in the second direction (D2), and the elastic energy of the elastic member may assist movement of the rack (132) when the rack (132) moves in the first direction (D1). By doing so, it is possible to offset the weight of the inner cable (121) and the frictional resistance between the inner cable (121) and the outer cable (122) by using the elastic energy and to increase the electric power generation efficiency. Instead of the elastic member, a weight that stores potential energy when the rack (132) moves in the second direction (D2) may be connected to an end portion of the rack (132), and the potential energy may be used to assist movement of the rack (132) in the first direction (D1).

### (Embodiment 2-3)

FIG. 14 illustrates another connection mechanism that converts reciprocating motion of the reciprocating mechanism (120) into rotational motion of the electric power generation mechanism (130), part (a) is a plan view, and part (b) is a side view. In the example shown in this figure, the electric power generation mechanism (130) includes a rack (140) and a gear mechanism (141). As in the aforementioned example, the rack (140) is placed, for example, on a slider. Due to the reciprocating motion of the inner cable (121), the rack (140) moves in the first direction (D1) and in the second direction (D2), which is opposite to the first direction (D1).

The rack (140) includes a first tooth array (140a) and a second tooth array (140b), each having a plurality of rack teeth, on both side surfaces.

The gear mechanism (141) meshes with the tooth arrays of the rack (140) and rotates the mechanical power transmission shaft (134) on the basis of movement of the rack (140) in at least one of the first direction (D1) and the second direction (D2). In the present embodiment, the gear mechanism (141) includes a first gear (142) that meshes with the first tooth array (140a), a second gear (144) that is connected to the first gear (142) via a shaft (143), a third gear (145) that meshes with the second tooth array (140b), a fourth gear (147) that is connected to the third gear (145) via a shaft (146), and a fifth gear (148) that meshes with the second gear (144) and the fourth gear (147). The mechanical power transmission shaft (134) is connected to the fifth gear (148).

The second gear (144) includes a first one-way clutch that allows the second gear (144) to be rotated by mechanical power that is transmitted from the shaft (143) when the rack (140) moves in the first direction (D1) and that does not allow the second gear (144) to be rotated by mechanical power that is transmitted from the shaft (143) when the rack (130) moves in the second direction (D2). The fourth gear (147) includes a second one-way clutch that allows the fourth gear (147) to be rotated by mechanical power that is transmitted from the shaft (146) when the rack (140) moves in the second direction (D2) and that does not allow the fourth gear (147) to be rotated by mechanical power that is transmitted from the shaft (146) when the rack (140) moves in the first direction (D1).

Therefore, when the rack (140) moves in the first direction (D1), the gears (142,144,148) rotate as indicated by solid line arrows in FIG. 14(a). Accordingly, the mechanical power transmission shaft (134) rotates in the direction indicated by a solid line arrow in FIG. 14(b). When the rack (140) moves in the second direction (D2), the gears (145,147,148) rotate as indicated by broken line arrows in FIG. 14(a). Accordingly, the mechanical power transmission shaft (134) rotates in the direction indicated by the solid line arrow in FIG. 14(b).

With this structure, even in wave electric power generation, in which the amplitude of reciprocating motion considerably changes in accordance with the tide level and the amplitude of waves, it is possible to stably transmit continuous unidirectional rotational motion to the electric power generation mechanism.

### Embodiment 3

### (Electric Power Generation System attached to Ship)

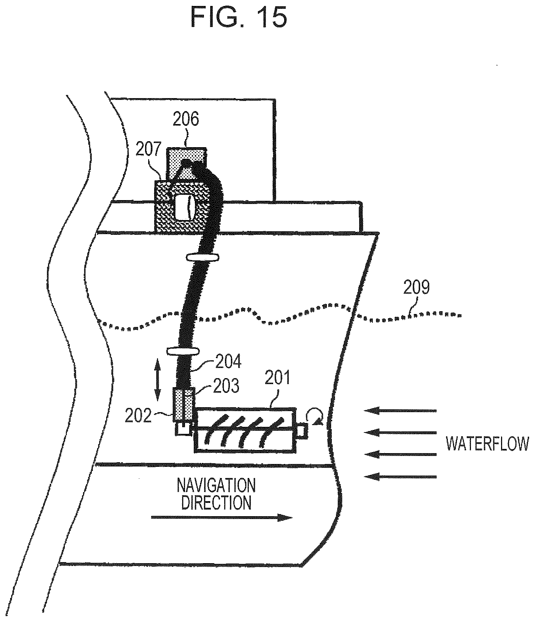

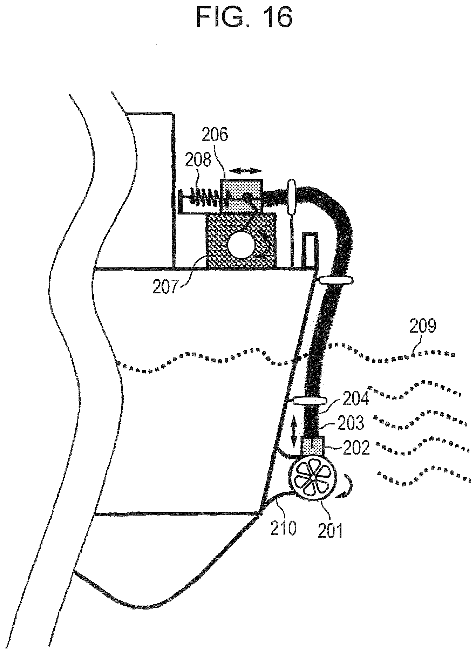

FIGS. 15 and 16 illustrate an example of a water electric power generation system for a ship. FIG. 15 illustrates the structure of the system seen from a side of the ship, and FIG. 16 illustrates the structure of the system when seen from the front of the ship. A screw (201) (corresponding to a receiving mechanism in the present invention) is fixed to the ship via a joint or the like, and the screw (201) is rotated by waterflow that is generated as the ship moves, flow of sea water or river water, or the like. In this case, the screw (201) may be a simple propeller. However, preferably, an Archimedes' screw is used to increase the efficiency. In the present embodiment, FIG. 15 illustrates an Archimedes' screw. A machine chamber (202), which is watertight, is connected to this rotation. In the machine chamber (202), a rotor unit and a simple lightweight motion converter, which coverts rotational motion into reciprocating motion by using a crank mechanism, a gear-change mechanism, or the like, are disposed. Because an example of this structure has been described in detail in the description of the wind electric power generation system, description of the structure will be omitted here. Energy that has been converted into reciprocating motion in the machine chamber (202) is transmitted to a motion converter (206) (constituting a part of an electric power generation mechanism in the present invention), which is located at any appropriate position on the ship deck, via a reciprocation transmitting cable (corresponding to a reciprocating mechanism in the present invention). Here, the reciprocation transmitting cable, which corresponds to a reciprocating mechanism in the present invention and which transmits a displacement of one end portion of the cable to the other end portion of the cable, is not limited to a combination of an inner cable (203) and an outer cable (204). For example, a hydraulic cable, which uses oil pressure, or the like can be used. The transmitted reciprocating energy is converted by the motion converter (206) into rotational energy and drives an electric power generator (207) (constituting a part of an electric power generation mechanism in the present invention). The numeral (208) denotes a spring, and the reciprocating torque of the inner cable (203) is adjusted by the spring. In the figures, the numeral (205) denotes joints that fix the reciprocating-energy transmitting cable to the hull, and the numeral (210) denotes a joint that fixes the screw to the hull. The numeral (209) denotes the water surface.

Heretofore, examples in which the present invention is applied to a wind electric power generation system, a wave electric power generation system, and an electric power generation system attached to a ship have been described. However, the present invention is not limited to these embodiments and can be also applied to an electric power generation system that utilizes, for example, river flow. Moreover, the present invention can be effectively applied not only to a large electric power generation facility but also to a small electric power generation facility, such as a small emergency electric power generation system for driving LED lighting or an oscillator, a small home electric power generation system utilizing wind power or wave power, and an electric power generation system for leisure activities.

For reference, the claims of two patent applications over which the present application claims priority are cited below (including amendments).
(Japanese Patent Application No. 2014-164159)

### [Claim 1]

An electric power generation system and an electric power generation plant in which an energy transmitting cable, which includes an outer cable and an inner cable that is slidably inserted into the outer cable, is used to transmit reciprocating motion obtained from natural energy.

### [Claim 2]

The electric power generation system and the electric power generation plant according to claim 1, wherein one of two ends of the inner cable of the energy transmitting cable according to claim 1 is connected to an energy converter that converts the natural energy into reciprocating motion, and the other end is connected to an electric power generation facility that converts reciprocating motion into electric power.

### [Claim 3]

The electric power generation system and the electric power generation plant according to claim 1 or 2, wherein the outer cable of the energy transmitting cable according to claim 1 has a structure including at least one layer that is one or a combination of a single layer, a mesh structure layer, and the like and the outer cable has flexibility and rigidity, and wherein a material of the outer cable includes one or a combination of a resin, a metal, a carbon material, and a synthetic fiber.

### [Claim 4]

The electric power generation system and the electric power generation plant according to claim 1 or 2, wherein a material that includes at least one of a metal, a carbon material, and a synthetic fiber is used as a material of the inner cable of the energy transmitting cable according to claim 1, and wherein the inner cable has a structure of a single wire, a stranded wire, or a composite of a single wire and a stranded wire so as to have flexibility and rigidity.

### [Claim 5]

The electric power generation system and the electric power generation plant according to claim 1 or 2, wherein the energy transmitting cable has a length of 10 centimeters or greater, and, when in use, the energy transmitting cable is linear or has at least one or more curved portions.

### [Claim 6]

The energy transmission cable according to claim 1, 2, or 3, wherein an inner surface of the outer cable and an outer surface of the inner cable are coated so as to reduce a friction coefficient when the inner cable slides and are waterproof processed.

### [Claim 7]

The electric power generation system and the electric power generation plant according to claim 1, wherein an energy combining unit combines reciprocating energy that is transmitted by a plurality of facilities in each of which the energy transmitting cable is connected to the energy converter according to claim 1 or 2, which converts natural energy into reciprocating motion, and wherein the combined reciprocating energy is transmitted to an electric power generation facility that converts the reciprocating energy into electric power by using at least one or more energy transmitting cables.

### [Claim 8]

The electric power generation system and the electric power generation plant according to claim 1, wherein the natural energy, which is a mechanical power source, is one of wave power, tidal power, and wind power.

### [Claim 9]

An energy transmission cable for transmitting reciprocating energy in an electric power generation system that converts natural energy into electric power, the energy transmission cable comprising: an outer cable that is made of a material that is one or a combination of a resin, a metal, a carbon material, and a synthetic fiber and that has a structure including at least one or more layers, each of the layers being one or a combination of a single layer, a mesh-structure layer, and the like and having flexibility and rigidity; and an inner cable that is inserted into the outer cable so as to be slidable, that is made of a material including at least one of a metal, a carbon material, and a synthetic fiber, and that has a structure of a single wire, a stranded wire, or a composite structure of a single wire and a stranded wire so as to have flexibility and rigidity.
(Japanese Patent Application No. 2014-221736)

### [Claim 1]

An electric power generation system for converting natural energy into electric power, comprising: a mechanical power converter that converts rotational energy into reciprocating energy; and a mechanical power converter that converts reciprocating energy into rotational energy.

### [Claim 2]

The electric power generation system according to claim 1, wherein the mechanical power converter of the electric power generation system according to claim 1, which converts rotational energy into reciprocating energy, converts rotational energy that a rotor unit including a screw, a propeller, and the like generates by converting natural energy into reciprocating energy, and wherein the mechanical power converter of the electric power generation system according to claim 1 that converts reciprocating energy into rotational energy converts reciprocating energy transmitted by a reciprocating energy transmitting cable into rotational energy.

### [Claim 3]

The electric power generation system according to claim 1 or 2, wherein a natural energy source is waterflow that occurs around a ship.

### [Claim 4]

The electric power generation system according to claim 1 or 2, wherein a natural energy source is wind power or an airflow that occurs around an automobile or a ship.

### [Claim 5]

The electric power generation system for converting natural energy into electric power according to any one of claims 1, 2, 3, and 4, wherein the mechanical power converter that converts rotational energy into reciprocating energy uses one of a crank mechanism, a Scotch yoke mechanism, and a rack-and-pinion mechanism, and wherein the mechanical power converter that converts reciprocating energy into rotational energy uses one of a crank mechanism, a Scotch yoke mechanism, and a rack-and-pinion mechanism. Reference Signs List

10 wind receiving mechanism, 10a housing of wind receiving mechanism, 10b guide shaft, 10c base, 10d bearing, 10e bearing, 20 reciprocating mechanism, 21 inner cable, 21a one of exposed end portions of inner cable, 21b the other exposed end portion of inner cable, 22 outer cable, 23 mechanical power transmission element, 24 mechanical power transmission element, 25 tubular guide, 26 tubular guide, 30 electric power generation mechanism, 30a piston crank, 30aa piston, 30ab crank, 30b housing, 30c guide shaft, 31 speed increasing device, 32 mechanical power transmission wheel, 33 electric power generator, 40 rotation mechanism, 41 blade, 42 hub, 43 rotor shaft, 44 wind-direction-adjustment device, 45 piston-crank mechanism, 45(a) piston, 45(b) crank, 46 containing portion, 46(a) enlarged diameter portion, 47 connection member, 48 protruding portion, 48a distal end portion, 49 guide member, 49a through-hole, 50 post, 51 base, 52 spiral spring-shaped portion, 53 wind pressure reducer, 110 wave power receiving mechanism, 111 float, 111a float, 112 housing, 112a opening of housing, 112b extending upper plate, 113 guide rod, 113a guide rod, 114 guide ring, 114a guide ring, 114' guide hole, 115 upper plate member, 116 surface facing the float with a gap therebetween, 117 plate member (member having a surface facing a float), 120 reciprocating mechanism, 121 inner cable, 122 outer cable, 123 mechanical power transmission element, 124 tubular guide, 125 mechanical power transmission element, 126 tubular guide, 130 electric power generation mechanism, 131 slider, 131a roller, 132 rack, D1 first direction, D2 second direction, 132a first tooth array, 132b second tooth array, 133 gear mechanism, 134 mechanical power transmission shaft, R rotation direction in which mechanical power transmission shaft is rotated, 135 speed increasing device, 136 electric power generator, 140 rack, D1 first direction of rack, D2 second direction of rack, 140a first tooth array, 140b second tooth array, 141 gear mechanism, 142 first gear, 143 shaft, 144 second gear, 145 third gear, 146 shaft, 147 fourth gear, 148 fifth gear, 161 first gear train, 161a uppermost gear, 162 second gear train, 162a uppermost gear, 170 housing, 180 breakwater, 180a upper surface of breakwater, 180b side surface of breakwater, 190 tide receiving mechanism, 201 screw, 202 machine chamber, 203 inner cable, 204 outer cable, 206 motion converter, 207 electric power generator, 208 reciprocating torque adjustment spring, 209 water surface, 245 piston-crank mechanism, 245(a) piston, 246 rotor wheel, 247 crank, 248 cylinder, 249 connection member, 250 protruding portion, 250a distal end portion, 251 containing portion, 251a enlarged diameter portion, 252 bearing

## Claims

1. An electric power generation system comprising:
a fluid receiving mechanism that is disposed in a region that receives a flowing fluid and that performs motion selected from a group consisting of rotational motion and reciprocating motion in accordance with a flow of the fluid;
a reciprocating mechanism that is connected to the fluid receiving mechanism and that performs reciprocating motion on the basis of the motion of the fluid receiving mechanism; and
an electric power generation mechanism that is disposed in a region different from the region in which the fluid receiving mechanism is disposed and that converts the reciprocating motion of the reciprocating mechanism into electric power,
wherein the reciprocating mechanism includes an inner cable and a tubular outer cable; the outer cable is disposed between the fluid receiving mechanism and the electric power generation mechanism; and the inner cable is inserted through the outer cable, is connected to the fluid receiving mechanism and to the electric power generation mechanism, performs reciprocating motion in the outer cable in accordance with the motion of the fluid receiving mechanism, and transmits the reciprocating motion to the electric power generation mechanism.

2. The electric power generation system according to claim 1, wherein the electric power generation mechanism converts the reciprocating motion transmitted by the inner cable into rotational motion and converts the rotational motion into electric power.

3. The electric power generation system according to claim 1 or 2, wherein the inner cable is made of one or more materials selected from a group consisting of a metal, a carbon material, a resin, and a synthetic fiber and has one or more structures made of the one or more materials and selected from a group consisting of a single wire, a stranded wire, and a composite structure of the single wire and the stranded wire.

4. The electric power generation system according to any one of claims 1 to 3, wherein the inner cable includes one or more cover layers that are formed in an outer part thereof, and each of the cover layers is made of one or more materials selected from a group consisting of a metal, a carbon material, a resin, and a synthetic fiber and has a structure selected from a single layer, a mesh structure layer, a wound-wire layer, and a composite of the layers.

5. The electric power generation system according to any one of claims 1 to 4, wherein at least one of a surface of the inner cable and an inner surface of the outer cable is processed with one or more processes selected from a group consisting of fluorocarbon resin coating, swaging, and waterproofing.

6. The electric power generation system according to any one of claims 1 to 5, wherein the outer cable is made of one or more materials selected from a group consisting of a metal, a carbon material, a resin, and a synthetic fiber and includes one or more layers made of the one or more materials and selected from a group consisting of a single layer, a wound-wire layer, a mesh structure layer, and a composite of the layers.

7. The electric power generation system according to any one of claims 1 to 6, wherein a surface of the outer cable is processed with one or more processes selected from a group consisting of ultraviolet-resistant coating, waterproofing, salt-proofing, and a combination of the processes.

8. The electric power generation system according to any one of claims 1 to 7, wherein both end portions of the inner cable are exposed from the outer cable, a rigid first mechanical power transmission element that is connected to the fluid receiving mechanism is attached to one of the exposed end portions of the inner cable, and a rigid second mechanical power transmission element that is connected to the electric power generation mechanism is attached to the other exposed end portion of the inner cable, and
wherein the fluid receiving mechanism includes a first tubular guide member that guides the first mechanical power transmission element so that the first mechanical power transmission element can perform reciprocating motion, and a second tubular guide member that guides the second mechanical power transmission element so that the second mechanical power transmission element can perform reciprocating motion.

9. The electric power generation system according to any one of claims 1 to 8, wherein the flowing fluid is a wind,
wherein the fluid receiving mechanism is disposed in a region that receives the wind and performs rotational motion in accordance with motion of the wind, and
wherein the reciprocating mechanism performs the reciprocating motion on the basis of the rotational motion of the receiving mechanism.

10. The electric power generation system according to claim 9, wherein the fluid receiving mechanism includes a mechanism that changes an orientation thereof in accordance with a wind direction, and a connection portion that connects the fluid receiving mechanism and the reciprocating mechanism includes a mechanism that transmits the rotational motion of the fluid receiving mechanism to the reciprocating mechanism without transmitting motion corresponding to a change in the orientation of the fluid receiving mechanism to the reciprocating mechanism.

11. The electric power generation system according to claim 9 or 10, wherein the fluid receiving mechanism is disposed in an upper part of a post, and the post is disposed on a vibration-damping base.

12. The electric power generation system according to any one of claims 9 to 11, wherein the post of the fluid receiving mechanism includes one or more elastically deformable intermediate portions.

13. The electric power generation system according to any one of claims 1 to 8, wherein the flowing fluid is seawater, the fluid receiving mechanism includes a float that is disposed on a sea surface and that performs up-and-down motion in accordance with up-and-down motion of the sea surface, and the inner cable is connected to the float.

14. The electric power generation system according to claim 13, wherein the fluid receiving mechanism includes a member that has a surface facing the float and that is disposed below the float, and a gap, which allows seawater to flow thereinto, is formed between the float and the surface facing the float.

15. The electric power generation system according to claim 13 or 14, further comprising a tide receiving mechanism including a float that performs up-and-down motion in accordance with up-and-down motion of the sea surface and that is different from the float of the fluid receiving mechanism and up-and-down motion transmitting means that transmits the up-and-down motion of the float to the fluid receiving mechanism.

16. The electric power generation system according to any one of claims 1 to 15, wherein the electric power generation mechanism includes
a rack that includes a tooth array and that moves in a first direction and a second direction in accordance with the reciprocating motion of the reciprocating mechanism,
a gear mechanism that meshes with the tooth array and rotates on the basis of movement of the rack in at least one of the first direction and the second direction,
a mechanical power transmission shaft that rotates in accordance with rotation of the gear mechanism, and
an electric power generator that generates electric power on the basis of rotation of the mechanical power transmission shaft.

17. The electric power generation system according to claim 16, wherein the gear mechanism includes
a first gear train that meshes with the tooth array and that rotates the mechanical power transmission shaft on the basis of movement of the rack in the first direction, and
a second gear train that meshes with the tooth array and that rotates the mechanical power transmission shaft on the basis of movement of the rack in the second direction.

18. The electric power generation system according to claim 17,
wherein the first gear train includes an odd number of gears,
wherein the second gear train includes an even number of gears, and
wherein a rotation direction in which the first gear train rotates the mechanical power transmission shaft when the rack moves in the first direction coincides with a rotation direction in which the second gear train rotates the mechanical power transmission shaft when the rack moves in the second direction.

19. The electric power generation system according to claim 18, wherein the first gear train includes a first gear including a first unidirectional clutch that transmits mechanical power generated by the movement of the rack in the first direction to the mechanical power transmission shaft and that does not transmit mechanical power generated by the movement of the rack in the second direction to the mechanical power transmission shaft, and
wherein the second gear train transmits mechanical power generated by the movement of the rack in the second direction to the mechanical power transmission shaft and transmits mechanical power generated by the movement of the rack in the first direction to the mechanical power transmission shaft.

20. The electric power generation system according to any one of claims 1 to 8, wherein the flowing fluid is water, and the fluid receiving mechanism performs rotational motion in accordance with waterflow that occurs around a ship or river flow, and
wherein the reciprocating mechanism performs the reciprocating motion on the basis of the rotational motion of the receiving mechanism.

21. A reciprocating mechanism for an electric power generation system, the reciprocating mechanism being connected to a fluid receiving mechanism that is disposed in a region that receives a flowing fluid and that performs motion selected from a group consisting of rotational motion and reciprocating motion in accordance with a flow of the fluid and to an electric power generation mechanism that is disposed in a region different from the region in which the fluid receiving mechanism is disposed, the reciprocating mechanism performing reciprocating motion on the basis of the motion of the fluid receiving mechanism, and the electric power generation system generating electric power by converting the reciprocating motion into rotational motion of the electric power generation mechanism,
wherein the reciprocating mechanism for the electric power generation system includes an inner cable and a tubular outer cable; the outer cable is disposed between the fluid receiving mechanism and the electric power generation mechanism; and the inner cable is inserted through the outer cable, is connected to the fluid receiving mechanism and to the electric power generation mechanism, performs reciprocating motion in the outer cable in accordance with the motion of the fluid receiving mechanism, and transmits the reciprocating motion to the electric power generation mechanism.

22. The reciprocating mechanism for an electric power generation system according to claim 21, wherein the inner cable is made of one or more materials selected from a group consisting of a metal, a carbon material, a resin, and a synthetic fiber and has one or more structures made of the one or more materials and selected from a group consisting of a single wire, a stranded wire, and a composite structure of the single wire and the stranded wire.

23. The reciprocating mechanism for an electric power generation system according to claim 21 or 22, wherein the inner cable includes one or more cover layers that are formed in an outer part thereof, and each of the cover layers is made of one or more materials selected from a group consisting of a metal, a carbon material, a resin, and a synthetic fiber and has a structure selected from a single layer, a mesh structure layer, a wound-wire layer, and a composite of the layers.

24. The reciprocating mechanism for an electric power generation system according to any one of claims 21 to 23, wherein at least one of a surface of the inner cable and an inner surface of the outer cable is processed with one or more processes selected from a group consisting of fluorocarbon resin coating, swaging, and waterproofing.

25. The reciprocating mechanism for an electric power generation system according to any one of claims 21 to 24, wherein the outer cable is made of one or more materials selected from a group consisting of a metal, a carbon material, a resin, and a synthetic fiber and includes one or more layers made of the one or more materials and selected from a group consisting of a single layer, a wound-wire layer, a mesh structure layer, and a composite of the layers.

26. The reciprocating mechanism for an electric power generation system according to any one of claims 21 to 25, wherein a surface of the outer cable is processed with one or more processes selected from a group consisting of ultraviolet-resistant coating, waterproofing, salt-proofing, and a combination of the processes.

27. The reciprocating mechanism for an electric power generation system according to any one of claims 21 to 26, wherein both end portions of the inner cable are exposed from the outer cable, a rigid first mechanical power transmission element that is connected to the fluid receiving mechanism is attached to one of the exposed end portions of the inner cable, and a rigid second mechanical power transmission element that is connected to the electric power generation mechanism is attached to the other exposed end portion of the inner cable, and
wherein the first mechanical power transmission element performs reciprocating motion while being guided by a first tubular guide member that is disposed on the fluid receiving mechanism side, and the second mechanical power transmission element performs reciprocating motion while being guided by a second tubular guide member that is disposed on the electric power generation mechanism side.
